# EUROPÄISCHE PATENTSCHRIFT

(11) **EP 2 032 234 B1**
(45) Veröffentlichungstag und Bekanntmachung des Hinweises auf die Patenterteilung: **10.08.2011**
(21) Anmeldenummer: 07730122.4
(22) Anmeldetag: 13.06.2007
(51) Int. Cl.: B01D 53/14

(54) **ENTFERNUNG VON KOHLENDIOXID AUS RAUCHGASEN**
REMOVAL OF CARBON DIOXIDE FROM FLUE GASES
ÉLIMINATION DE DIOXYDE DE CARBONE DANS DES FUMÉES

(30) Priorität: 13.06.2006 EP 06115408
(43) Veröffentlichungstag der Anmeldung: 11.03.2009
(73) Patentinhaber: BASF SE, 67056 Ludwigshafen (DE)
(72) Erfinder: ASPRION, Norbert, 67063 Ludwigshafen (DE); CLAUSEN, Iven, 68199 Mannheim (DE); LICHTFERS, Ute, 76187 Karlsruhe (DE)
(86) Internationale Anmeldenummer: PCT/EP2007/055820
(87) Internationale Veröffentlichungsnummer: WO 2007/144372

(56) Entgegenhaltungen:
- EP-A1- 0 331 788
- WO-A-02/07862
- WO-A-02/09849
- WO-A-2005/087350
- WO-A-2007/045679
- DE-A1- 4 201 921

## Beschreibung

Die vorliegende Erfindung betrifft ein Verfahren zum Entfernen von Kohlendioxid aus Gasströmen mit niedrigen Kohlendioxid-Partialdrücken, insbesondere zum Entfernen von Kohlendioxid aus Rauchgasen.

Die Entfernung von Kohlendioxid aus Rauchgasen ist aus verschiedenen Gründen wünschenswert, insbesondere aber zur Verminderung der Emission von Kohlendioxid, die als Hauptursache für den so genannten Treibhauseffekt angesehen wird.

Im industriellen Maßstab werden zur Entfernung von Sauergasen, wie Kohlendioxid, aus Fluidströmen häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Rauchgase weisen sehr geringe Kohlendioxid-Partialdrücke auf, da sie in der Regel bei einem Druck nahe dem Atmosphärendruck anfallen und typischerweise 3 bis 13 Vol.-% Kohlendioxid enthalten. Um eine wirksame Entfernung von Kohlendioxid zu erreichen, muss das Absorptionsmittel eine hohe Sauergas-Affinität aufweisen, was in der Regel bedeutet, dass die Kohlendioxid-Absorption stark exotherm verläuft. Andererseits bedingt eine hohe Sauergas-Affinität einen erhöhten Energieaufwand bei der Regeneration des Absorptionsmittels.

Die EP-A 879 631 beschreibt ein Verfahren zum Entfernen von CO₂ aus einem Verbrennungsgas durch Kontakt des Verbrennungsgases bei Atmosphärendruck mit einer wässrigen Aminlösung. Die Aminlösung enthält ein sekundäres und ein tertiäres Amin, jeweils in einer Konzentration von 10 bis 45 Gew.-%.

Die US-A 6,165,433 betrifft die Kohlendioxid-Entfernung aus einem Gasstrom, dessen Kohlendioxidpartialdruck 10 psia oder weniger beträgt, unter Verwendung eines Lösungsmittels, das Wasser, 5 bis 35 Gew.-% eines schnellen Amins und 5 bis 50 Gew.-% eines langsamen Amins enthält. Schnelle Amine sind Monoethanolamin, Diethanolamin, Piperazin und Diisopropanolamin. Langsame Amine sind Methyldiethanolamin, Triethanolamin, und sterisch gehinderte Amine wie 2-Amino-2-methyl-1-propanol.

Die WO 02/07862 beschreibt ein Verfahren und eine Waschflüssigkeit zum Entsäuern eines Fluidstroms. Die Waschflüssigkeit enthält ein tertiäres aliphatisches Alkanolamin und einen Aktivator wie 3-Methylaminopropylamin. Die Behandlung von Fluidströmen mit niedrigen Kohlendioxidpartialdrücken ist nicht angesprochen.

Die WO 2005/087350 offenbart ein Verfahren zum Entfernen von Kohlendioxid aus Rauchgasen mit einem flüssigen Absorptionsmittel, welches ein tertiäres aliphatisches Amin und einen Aktivator wie 3-Methylaminopropylamin umfasst. Das tertiäre aliphatische Amin soll eine Reaktionsenthalpie Δ_{R}H der Protonierungsreaktion aufweisen, die größer ist als diejenige von Methyldiethanolamin. Das Absorptionsmittel soll 20 bis 60 Gew.-% tertiäres aliphatisches Amin und 1 bis 10 Gew.-% Aktivator enthalten.

Der Erfindung liegt die Aufgabe zu Grunde, ein Verfahren anzugeben, das eine weitgehende Entfernung von Kohlendioxid aus Gasströmen mit niedrigem Kohlendioxid-Partialdrücken gestattet und bei dem die Regeneration des Absorptionsmittels mit vergleichsweise geringem Energieaufwand möglich ist.

Die Aufgabe wird gelöst durch ein Verfahren gemäß Anspruch 1.

Das erfindungsgemäß verwendete Absorptionsmittel enthält eine gegenüber der WO 2005/087350 deutlich erhöhte Konzentration des Aktivators (B). Es ist überraschend, dass damit der Energieaufwand zur Regeneration des Absorptionsmittels gesenkt werden kann. Üblicherweise wird davon ausgegangen, dass hohe Aktivatorkonzentrationen sich negativ auf den Energiebedarf auswirken.

Ein bevorzugter Aktivator ist 3-Methylaminopropylamin (MAPA).

Als tertiäre aliphatische Alkanolamine (A) eignen sich z. B. Methyldiethanolamin (MDEA), Methyldiisopropanolamin und n-Butyldiethanolamin, wovon Methyldiethanolamin und Methyldiisopropanolamin am meisten bevorzugt sind. Als Komponente (A) können auch Gemische verschiedener tertiärer aliphatischer Alkanolamine verwendet werden.

Vorzugsweise beträgt die Summe der Konzentrationen von (A) und (B) im Absorptionsmittel 2,8 bis 6,3 mol/l, insbesondere 3 bis 6 mol/l.

Vorzugsweise liegt das molare Verhältnis von (B) zu (A) im Bereich von 1 : 2,5 bis 1,3 : 1, insbesondere 1 : 2 bis 1,1 : 1.

Die aliphatischen Amine werden in Form ihrer wässrigen Lösungen eingesetzt. Die Lösungen können zusätzlich physikalische Lösungsmittel enthalten, die z. B. ausgewählt sind unter Cyclotetramethylensulfon (Sulfolan) und dessen Derivaten, aliphatischen Säureamiden (Acetylmorpholin, N-Formylmorpholin), N-alkylierten Pyrrolidonen und entsprechenden Piperidonen, wie N-Methylpyrrolidon (NMP), Propylencarbonat, Methanol, Dialkylethern von Polyethylenglykolen und Gemischen davon.

Sofern vorhanden, werden beim erfindungsgemäßen Verfahren neben Kohlendioxid üblicherweise auch andere Sauergase, wie z. B. H₂S, SO₂, CS₂, HCN, COS, Disulfiden oder Mercaptanen, aus dem Gasstrom entfernt.

Bei dem Gasstrom handelt es sich im Allgemeinen um einen Gasstrom, der auf folgende Weise gebildet wird:
a) Oxidation organischer Substanzen z. B. Verbrennungs- oder Rauchgase (flue gas),
b) Kompostierung und Lagerung organische Substanzen enthaltender Abfallstoffe, oder
c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organischen Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Im Allgemeinen enthalten diese Gasströme bei Normalbedingungen weniger als 50 mg/m³ Schwefeldioxid.

Die Ausgangsgase können entweder den Druck aufweisen, der etwa dem Druck der Umgebungsluft entspricht, also z. B. Normaldruck oder einen Druck, der vom Normaldruck um bis zu 1 bar davon abweicht.

Zur Durchführung des erfindungsgemäßen Verfahrens geeignete Vorrichtungen umfassen wenigstens eine Waschkolonne, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Die Temperatur des Absorptionsmittels beträgt im Absorptionsschritt im Allgemeinen etwa 30 bis 70°C, bei Verwendung einer Kolonne beispielsweise 30 bis 60°C am Kopf der Kolonne und 40 bis 70°C am Boden der Kolonne. Es wird ein an sauren Gasbestanteilen armes, d. h. ein an diesen Bestandteilen abgereichertes Produktgas (Beigas) und ein mit sauren Gasbestandteilen beladenes Absorptionsmittel erhalten.

Aus dem mit den sauren Gasbestandteilen beladenen Absorptionsmittel kann das Kohlendioxid in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen regeneriert man das beladene Absorptionsmittel durch
a) Erwärmung, z. B. auf 70 bis 110 °C,
b) Entspannung,
c) Strippen mit einem inerten Fluid
oder eine Kombination zweier oder aller dieser Maßnahmen.

In der Regel wird das beladene Absorptionsmittel zur Regeneration erwärmt und das freigesetzte Kohlendioxid wird z. B. in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen. Der erhaltene gas-flüssig-gemischtphasige Strom wird in ein Phasentrenngefäß geleitet, aus dem das Kohlendioxid abgezogen wird; die Flüssigphase wird zur vollständigen Regeneration des Absorptionsmittels in die Desorptionskolonne geleitet.

Vor der erfindungsgemäßen Absorptionsmittel-Behandlung wird das Rauchgas vorzugsweise einer Wäsche mit einer wässrigen Flüssigkeit, insbesondere mit Wasser, unterzogen, um das Rauchgas abzukühlen und zu befeuchten (quenchen). Bei der Wäsche können auch Stäube oder gasförmige Verunreinigungen wie Schwefeldioxid entfernt werden.

Die Erfindung wird anhand der beigefügten Figur und des nachfolgenden Beispiels näher erläutert.

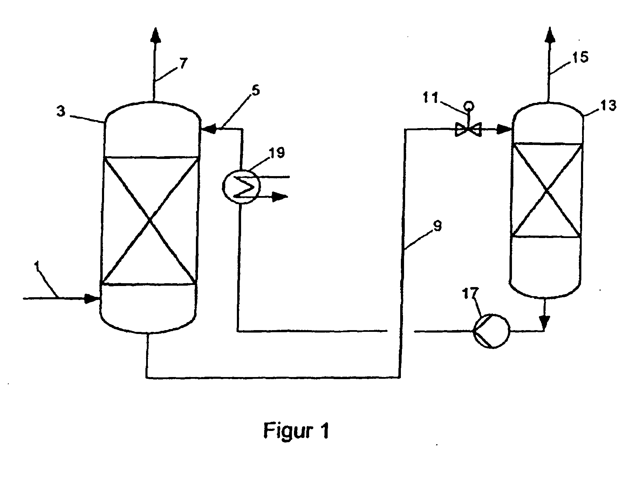

Fig. 1 ist eine schematische Darstellung einer zur Durchführung des erfindungsgemäßen Verfahrens geeigneten Anlage.

Gemäß Fig. 1 wird über eine Zuleitung 1 ein geeignet vorbehandeltes, Kohlendioxid enthaltendes Verbrennungsgas in einem Absorber 3 mit dem regenerierten Absorptionsmittel, das über die Absorptionsmittelleitung 5 zugeführt wird, im Gegenstrom in Kontakt gebracht. Das Absorptionsmittel entfernt Kohlendioxid durch Absorption aus dem Verbrennungsgas; dabei wird über eine Abgasleitung 7 ein an Kohlendioxid armes Reingas gewonnen. Über eine Absorptionsmittelleitung 9 und ein Drosselventil 11 wird das mit Kohlendioxid beladene Absorptionsmittel einer Desorptionskolonne 13 zugeleitet. Im unteren Teil der Desorptionskolonne 13 wird das beladene Absorptionsmittel mittels eines (nicht dargestellten) Aufheizers erwärmt und regeneriert. Das dabei freigesetzte Kohlendioxid verlässt die Desorptionskolonne 13 über die Abgasleitung 15. Das regenerierte Absorptionsmittel wird anschließend mittels einer Pumpe 17 über einen Wärmetauscher 19 der Absorptionskolonne 3 wieder zugeführt.

### Beispiel

Dieses Beispiel beruht auf der mittels einer Simulationssoftware simulierten Entfernung von CO₂ aus einem Fluidstrom. Die Grundlagen dieser Simulationsmethode sind in N. Asprion, Nonequilibrium Rate-Based Simulation of Reactive Systems: Simulation Model, Heat Transfer, and Influence of Film Discretization, Ind. Eng. Chem. Res.; 2006; 45, 2054-2069 beschrieben.

Die Simulation beruht auf folgenden Annahmen:
Absorptionsmittel: Wasser/MDEA/MAPA-Gemisch mit 40 Gew.-% Gesamtamingehalt;
Feedgas: CO₂-Gehalt 12,9 mol-%, Temperatur 47°C, Druck 1,1 bar (absolut),
Absorptionsmitteltemperatur: 45 °C;
90% CO₂-Entfernung.

Es wird eine einfache Absorber-Desorber-Verschaltung mit interner Wärmerückgewinnung in einem Gegenstromwärmeübertrager zugrunde gelegt, in dem die heiße regenerierte Lösung zum Aufheizen der kühleren beladenen Lösung verwendet wird. Die Temperaturdifferenz zwischen den beiden Strömen beträgt am kalten Ende des Gegenstromwärmeübertragers 10°C. Die Desorption wird in einem Stripper bei 2,5 bar durchgeführt. Absorberkolonne mit 17m Packungshöhe (Typ IMTP 50), Desorber 10m Packungshöhe (Typ IMTP 50).

Die Phasengleichgewichte wurden mit dem Pitzer-Modell berechnet (K.S. Pitzer, Activity Coefficients in Electrolyte Solutions 2nd ed., CRC-Press, 1991, Chapter 3, Ion Interaction Approach: Theory, die Parameter wurden an Phasengleichgewichtsmessungen im System CO2/H2O/MDEA/MAPA angepasst).

Man variierte die Zusammensetzung des Absorptionsmittels und bestimmte den jeweils erforderlichen Regenerationsenergiebedarf. Man fand, dass bei einer Aktivatorkonzentration von 16 Gew.% MAPA nur 89% der Verdampferenergie und 69% der Lösungsmittelumlaufmenge im Vergleich zu einer Lösung mit 10 Gew.% Aktivatorkonzentration benötigt werden. Beide Beispiele sind erfindungsgemäß.

## Patentansprüche

1. Verfahren zum Entfernen von Kohlendioxid aus einem Gasstrom, in dem der Partialdruck des Kohlendioxids im Gasstrom weniger als 200 mbar beträgt, wobei man den Gasstrom mit einem flüssigen Absorptionsmittel in Kontakt bringt, das eine wässrige Lösung
(A) eines tertiären aliphatischen Alkanolamins und
(B) eines Aktivators der allgemeinen Formel
R¹-NH-R²-NH₂
umfasst, worin R¹ für C₁-C₆-Alkyl steht und R² für C₂-C₆-Alkylen steht,
wobei die Summe der Konzentrationen von A und B im Absorptionsmittel 2,8 bis 6,3 mol/l beträgt und das molare Verhältnis von B zu A im Bereich von 1 : 2,5 bis 1,3 : 1 liegt.

2. Verfahren nach Anspruch 1, wobei es sich bei dem Aktivator um 3-Methylaminopropylamin handelt.

3. Verfahren nach Anspruch 1 oder 2, wobei das tertiäre aliphatische Amin A ausgewählt ist unter Methyldiethanolamin, Methyldiisopropanolamin und n-Butyldiethanolamin.

4. Verfahren nach einem der vorhergehenden Ansprüche, wobei die Summe der Konzentrationen von A und B im Absorptionsmittel 3 bis 6 mol/l beträgt.

5. Verfahren nach einem der vorhergehenden Ansprüche, wobei das molare Verhältnis von B zu A im Bereich von 1 : 2 bis 1,1 : 1 liegt.

6. Verfahren nach einem der vorhergehenden Ansprüche, wobei der Gasstrom
a) der Oxidation organischer Substanzen,
b) der Kompostierung oder Lagerung organischer Substanzen enthaltender Abfallstoffe, oder
c) der bakteriellen Zersetzung organischer Substanzen entstammt.

7. Verfahren nach einem der vorhergehenden Ansprüche, wobei man das beladene Absorptionsmittel durch
a) Erwärmung,
b) Entspannung,
b) Strippen mit einem inerten Fluid
oder eine Kombination zweier oder aller dieser Maßnahmen regeneriert.

## Claims

1. A process for removing carbon dioxide from a gas stream in which the partial pressure of the carbon dioxide in the gas stream is less than 200 mbar, the gas stream being contacted with a liquid absorption medium which comprises an aqueous solution of
(A) a tertiary aliphatic alkanolamine and
(B) an activator of the formula 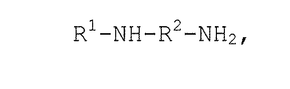 where R¹ is C₁-C₆-alkyl and R² is C₂-C₆-alkylene,
the sum of the concentrations of A and B in the absorption medium being 2.8 to 6.3 mol/l and the molar ratio of B to A being in the range from 1:2.5 to 1.3:1.

2. The process according to claim 1, wherein the activator is 3-methylaminopropylamine.

3. The process according to claim 1 or 2, wherein the tertiary aliphatic amine A is selected from methyldiethanolamine, methyldiisopropanolamine and n-butyldiethanolamine.

4. The process according to any of the preceding claims, wherein the sum of the concentrations of A and B in the absorption medium is 3 to 6 mol/l.

5. The process according to any of the preceding claims, wherein the molar ratio of B to A is in the range of 1:2 to 1.1:1.

6. The process according to any of the preceding claims, wherein the gas stream originates from
a) the oxidation of organic substances,
b) the composting or storage of waste materials comprising organic substances, or
c) the bacterial decomposition of organic substances.

7. The process according to any of the preceding claims, wherein the loaded absorption medium is regenerated by
a) heating,
b) expansion,
b) stripping with an inert fluid
or a combination of two or all of these measures.

## Revendications

1. Procédé d'élimination de dioxyde de carbone d'un courant gazeux, la pression partielle du dioxyde de carbone dans le courant gazeux étant inférieure à 200 mbar, dans lequel le courant gazeux est mis en contact avec un agent d'absorption liquide qui comprend une solution aqueuse
(A) d'une alcanolamine aliphatique tertiaire et
(B) d'un activateur de formule générale 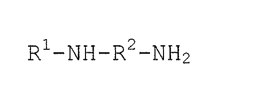 dans laquelle R¹ représente un alkyle en C₁-C₆ et R² représente un alkylène en C₂-C₆,
la somme des concentrations de A et B dans l'agent d'absorption étant de 2,8 à 6,3 mol/l et le rapport molaire de B sur A étant dans la plage allant de 1:2,5 à 1,3:1.

2. Procédé selon la revendication 1, dans lequel l'activateur est la 3-méthylaminopropylamine.

3. Procédé selon la revendication 1 ou 2, dans lequel l'amine aliphatique tertiaire A est choisie parmi la méthyldiéthanolamine, la méthyldiisopropanolamine et la n-butyldiéthanolamine.

4. Procédé selon l'une quelconque des revendications précédentes, dans lequel la somme des concentrations de A et B dans l'agent d'absorption est de 3 à 6 mol/l.

5. Procédé selon l'une quelconque des revendications précédentes, dans lequel le rapport molaire de B sur A est dans la plage allant de 1:2 à 1,1:1.

6. Procédé selon l'une quelconque des revendications précédentes, dans lequel le courant gazeux est issu
a) de l'oxydation de substances organiques,
b) du compostage ou du stockage de déchets contenant des substances organiques ou
c) de la décomposition bactérienne de substances organiques.

7. Procédé selon l'une quelconque des revendications précédentes, dans lequel l'agent d'absorption chargé est régénéré par
a) chauffage,
b) détente,
c) extraction avec un fluide inerte,
ou une combinaison de deux ou de la totalité de ces mesures.
